# EUROPEAN PATENT APPLICATION

(11) **EP 4 439 953 A1**
(43) Date of publication of application: **02.10.2024**
(21) Application number: 23165826.1
(22) Date of filing: 31.03.2023
(51) Int. Cl.: H02M 1/36, C25B 15/02

(54) **VOLTAGE CONTROLLED RECTIFIER APPLICATION FOR WATER-ELECTROLYSIS**

(71) Applicant: Siemens Energy Global GmbH & Co. KG, 81739 München (DE)
(72) Inventor: Schumann, Sven, 91452 Wilhermsdorf (DE); Atmadji, Ali, 91058 Erlangen (DE); Runser, Thibaut, 90478 Nürnberg (DE)

(57) **Abstract**

A circuit-arrangement and a method for switching-on / shutting-down an electrolysis system utilizing a voltage controlled rectifier are disclosed, whereby the output voltage V_{dc} of the active front end rectifier is ramped-up in a time-related function starting below knee point K of the electrolysis system and/or the output voltage V_{dc} of the active front end rectifier is ramped -down in a time-related function from an operational point to below the knee point K of the electrolysis system. By designing an active front end rectifier according to the invention to consider the knee point K of an electrolysis curve, a controlled ramp-up and ramp-down are performed without adding additional equipment. Moreover, the common degradation of the electrolysis cells can be reduced, since regular and rapid changes in current I density, which cause acceleration of the membrane, can be prevented.

## Description

The present invention relates to a device, especially a circuit-arrangement, and a method for switching-on / shutting-down a water-electrolysis system.

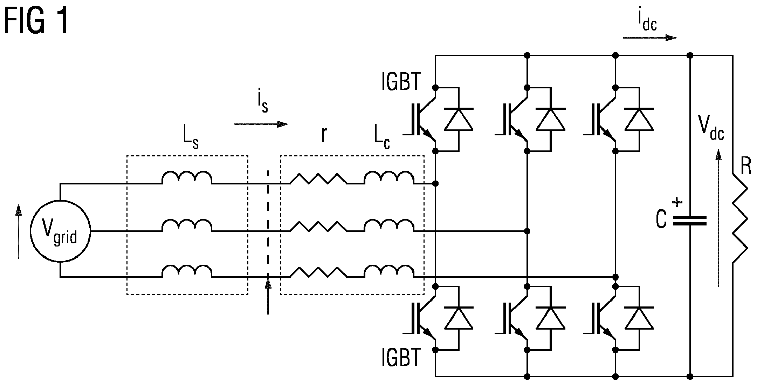

Active front end rectifiers can be used to supply water-electrolysis systems, see figure 1. They typically comprise active switches (IGBTs for example but not limited to) and feature some attractive benefits. The input currents iₛ can be controlled to be sinusoidal signals in phase to the grid voltage V_{grid}, this results in a power factor close to unity and low-order harmonics. This is very beneficial when connecting a large load to a potentially weak, public grid or islanded grid.

The active front end rectifier has the drawback to be voltage controlled and not current controlled as it should be with electrolyzer power supplies. The same applies for some other topologies, like flying-capacitor, and Vienna rectifiers, to name a few. In addition, it can only operate in a rather narrow voltage band regarding the possible DC output voltage V_{dc} and therefore not deliver voltage on the whole polarization curve of the electrolyzer. There is a dead band gap between 0V and the minimum rectified output voltage V_{dc}. As a result, its operating range must be chosen carefully to meet the required operational points.

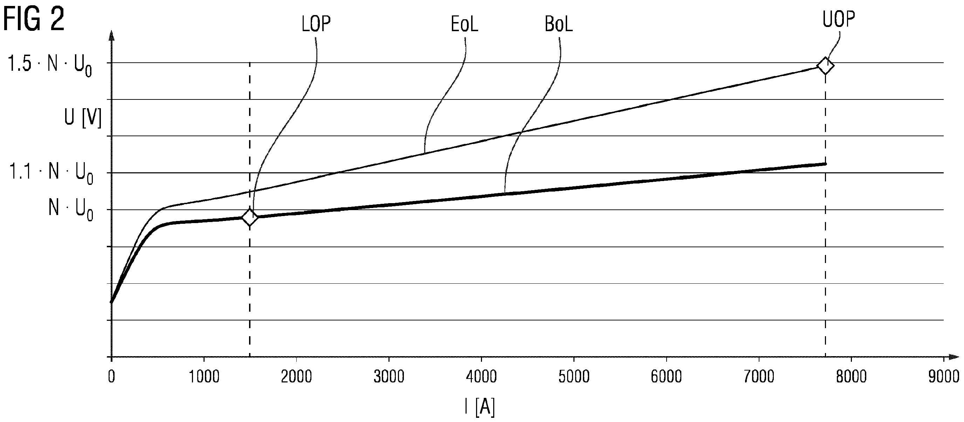

Since the polarization curve of a water-electrolysis is sensitive to voltage changes, rather small voltage changes cause strong changes in current, see figure 2. Should the rectifier's operating range for example only consider the lower operating point LOP and upper operating point UOP, at every switch-on operation, a current i_{dc} in the kA-range would be switched on instantaneously. Since the current i_{dc} cannot be controlled by the rectifier itself, this can only be avoided by using additional, expensive and space-consuming equipment. The strong change in current density causes mechanical stress to the electrolyzer's membranes (more gas being produced on one side of the membrane, than on the other one which results in a pressure difference) and might result in increased degradation. Therefore, it is desirable to avoid strong current changes.

In addition, the operating range of the active front end rectifier also depends on the current grid voltage V_{grid}, which might fluctuate in a band of typically ±10%, depending on the grid code. If the grid voltage V_{grid} is higher than specified, the rectifier's lowest possible output voltage increases and thus the current during switch on operation.

An alternative solution could be the application of additional coils L_{c} (reduce maximum current steepness, but very expensive, space-consuming for kA-applications) or charging resistors r before the active front end rectifier, that would also add to the costs, create additional losses and need to be switched on and off.

In light of the above, there exists a need for an improved start-up of the electrolysis using an active front end rectifier.

The object of the present invention is achieved by a circuit-arrangement according to claim 1, and a method for switching-on / shutting down an electrolysis system according to claim 8.

Advantageously, the present invention performs a more controlled start-up / shutting down of the electrolysis using an active front end rectifier.

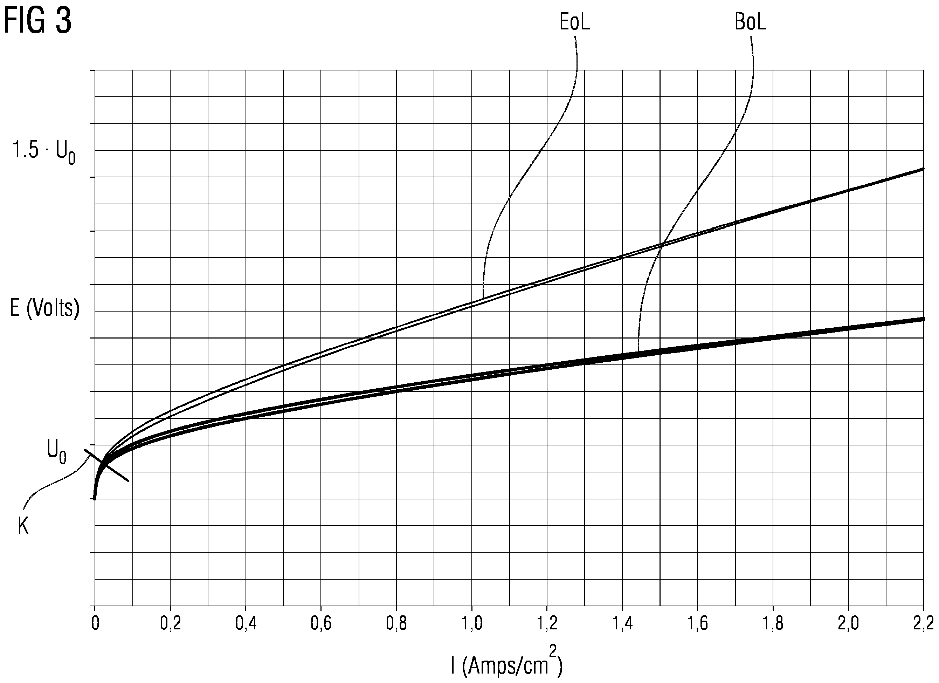

The lower operational point LOP of the active front end rectifier is chosen to be below the knee-point K of the polarization curve, see figure 3.

It is the invention's merit having found, that for voltages below the knee point K of the polarization curve, the electrolysis' current demand I changes only little based on the voltage applied, whereas for voltages above the knee point K, the current demand I becomes highly sensitive to voltage changes.

It is beneficial to choose the lower operation point LOP of an active front end rectifier to be below the knee point K, taking into account possible voltage fluctuations from the grid (±10 - 15%). By this, the rectifier is able to increase its voltage V_{dc} in a controlled manner while crossing the knee point K of the polarization curve targeting the relevant operational point, thus also ramping up the current I instead of switching on a high current directly.

The upper operation voltage should be chosen to allow for the nominal operation current and voltage of the electrolysis, also considering the voltage fluctuations from the grid (see above).

By designing an active front end rectifier to consider the knee point K of an electrolysis curve, a controlled ramp-up and ramp-down are performed without adding additional equipment. Alternatively, the expected degradation can be reduced, since regular and rapid changes in current I density, which cause acceleration of the membrane, can be prevented.

Advantageous further embodiments of the invention are given in the subclaims.

Further characteristics and advantages will be clearer from the description of a number of preferred but not exclusive embodiments of the invention illustrated purely by way of non-limitative example in the accompanying drawings, wherein:
Fig 1 depicts a scheme of a possible active front-end rectifier,
Fig 2 depicts a polarization curve of a PEM electrolysis,
Fig 3 depicts a polarization curve of PEM electrolysis cell,
Fig 4 depicts an active front end rectifier design considering polarization curve of PEM electrolysis cell and
Fig 5 depicts an active front end rectifier design considering polarization curve of PEM electrolysis plant.

In the figures, the same designations denote the same elements.

Fig 1 depicts an example of an active front-end rectifier, which converts a 3-phase alternating grid voltage V_{grid}, exhibiting alternating input currents iₛ, by three half-bridges into a direct output voltage V_{dc}, exhibiting a direct output current i_{dc}. The six IGBTs, each yielding a free-wheeling diode, of the three half-bridges are controlled for the required output voltage V_{dc} and the input currents iₛ being sinusoidal signals in phase to the grid voltage V_{grid}.

Fig 2 depicts an exemplary polarization curve of a PEM (Proton Exchange Membrane) electrolysis (S300) with begin of life BoL and end of life EoL as parameters. U0 defines the knee voltage and N the number of cells in series. It is evident, that the lower operation point LOP is close about 1.1*N*U0 Volt and 1.500 Ampere, whereas the upper operation point UOP is close about 2*N*U0 Volt and 7.800 Ampere.

Fig 3 depicts an exemplary polarization curve of PEM (Proton Exchange Membrane) electrolysis cell with begin of life BoL and end of life EoL as parameters. It is evident, that the operation voltage is in the range of 1.1*U0 Volt to 2*U0 Volt and the operation current I density is in the range of 0.4 to 2.2 Ampere per square centimeter. The knee point K being defined as U0 Volt and below 0.1 Ampere per square centimeter.

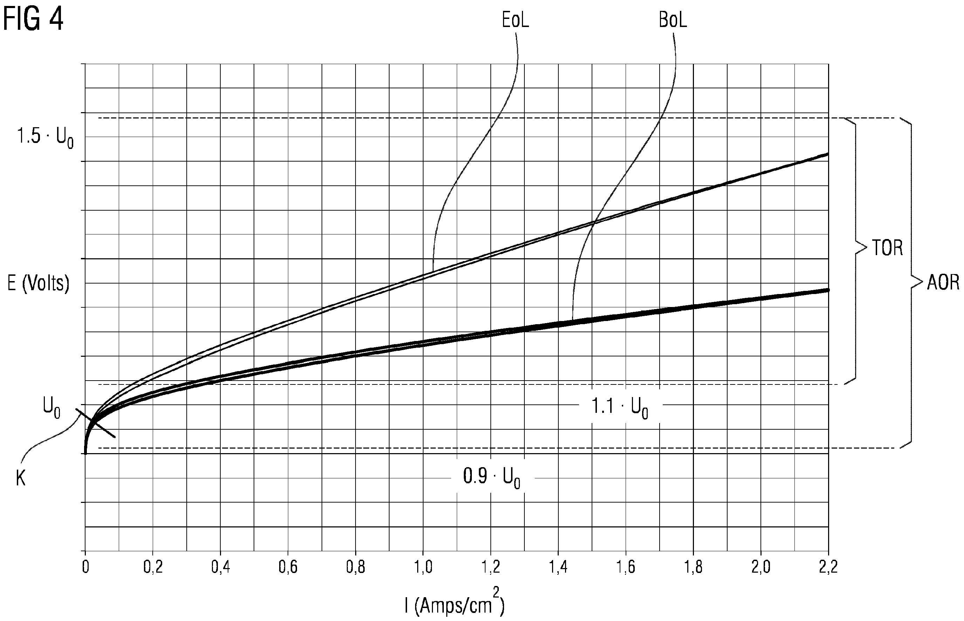

Fig 4 depicts the polarization curve of PEM electrolysis cell along with two operating ranges of two different active frond end rectifier designs. One with a typical operation range TOR in the range of 1.1*U0 Volt to 1.5*U0 Volt per cell and the other with an adjusted operation range AOR of 0.9*U0 Volt to 1.5*U0 Volt per cell for a controlled ramp up / ramp down according to the invention are given. The typical operation range TOR and the adjusted operation range AOR both considering grid voltage fluctuations of +/- 10-15% and ageing effects of electrolysis.

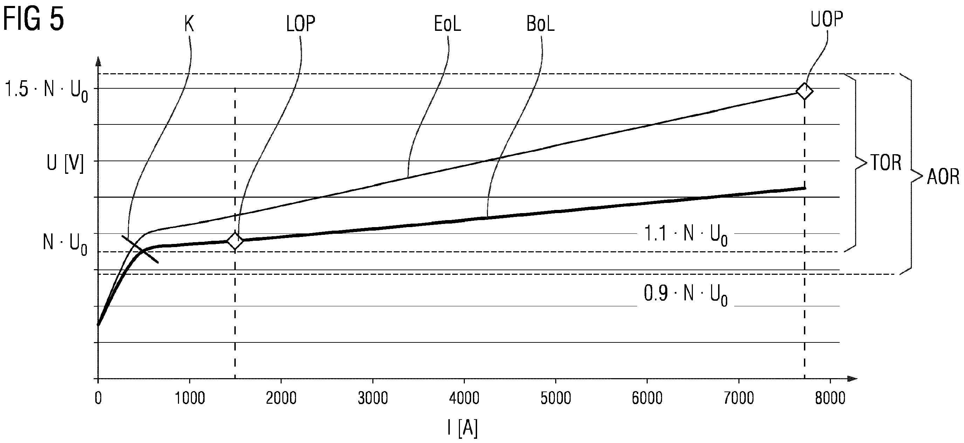

Fig 5 depicts the polarization curve of PEM electrolysis plant covering 300 PEM electrolysis cells along with two operating ranges of two different active frond end rectifier designs. It is pointed out, that the polarization curve is not shown precisely enough for lower operating ranges, while the real typical knee point K is shown in figure 4. Fig 5 corresponds to Fig 2, while a typical operation range TOR in the range of 1.1*N*U0 Volt to 1.5*N*U0 Volt and an adjusted operation range AOR of 0.9*N*U0 Volt to 1.5*N*U0 Volt for controlled ramp up / ramp down according to the invention are given. The typical operation range TOR and the adjusted operation range AOR both considering grid voltage fluctuations of +/- 10-15% and ageing effects of electrolysis.

The invention thus conceived is susceptible of numerous modifications and variations, which are all within the scope of the same inventive concept. Moreover, all the details may be replaced by other technically equivalent elements. In practice, the materials used as well as the contingent dimensions and shapes can be varied without limitation according to requirements.

### List of designations

- AOR -: Adjusted operation range
- BoL -: Begin of Life
- C -: capacitor
- EoL -: End of Life
- IGBT -: Insulated Gate Bipolar Transistor
- i_{dc} -: output current, direct current
- I -: current in [A]mpere
- iₛ -: input current
- K -: knee-point of the polarization curve
- kA -: kilo Ampere
- L_{c} -: charge inductance
- LOP -: lower operating point
- Lₛ -: supply inductance
- N -: number of cells in series
- PEM -: Proton Exchange Membrane
- r -: charging resistance
- R -: load resistance
- TOR -: Typical operation range
- U -: voltage in [V]olt
- U0 -: knee voltage
- UOP -: upper operating point
- V_{dc} -: output voltage, direct current
- V_{grid} -: grid voltage

## Claims

1. Circuit-arrangement for starting-up and/or shutting-down an electrolysis system,
- providing an active front end rectifier,
- the active front end rectifier being prepared for starting operation at an output voltage V_{dc} below the knee point (K) of the electrolysis system,
- providing a control unit prepared to increase the output voltage V_{dc} in line with a time-related ramp-up-function.

2. Circuit-arrangement according to claim 1,
**characterized in that**
the control unit is prepared to decrease the output voltage V_{dc} in line with a time-related ramp-down-function.

3. Circuit-arrangement according to claim 1 or claim 2,
**characterized in that**
the time-related ramp-up-function and/or the time-related ramp-down-function amount(s) in minutes.

4. Circuit-arrangement according to one of the preceding claims,
**characterized in that**
the time-related ramp-up-function and/or the time-related ramp-down-function amount(s) in seconds.

5. Circuit-arrangement according to one of the preceding claims,
**characterized in that**
the time-related ramp-up-function and/or the time-related ramp-down-function amount(s) in milliseconds.

6. Circuit-arrangement according to one of the preceding claims,
**characterized in that**
the active front end rectifier is type of voltage controlled.

7. Circuit-arrangement according to one of the preceding claims,
**characterized in that**
the output voltage V_{dc} of the active front end rectifier is controlled in a voltage range from 1.1*U0 Volt to 1.5*U0 Volt for each electrolysis cell of the electrolysis system.

8. Method for starting-up and/or shutting-down an electrolysis system utilizing an active front end rectifier according to one of the afore standing claims 1 to 7,
**characterized in that**
the output voltage V_{dc} of the active front end rectifier is ramped-up in a time-related function starting below knee point (K) of the electrolysis system and/or the output voltage V_{dc} of the active front end rectifier is ramped-down in a time-related function from an operational point to below the knee point (K) of the electrolysis system.
